# EUROPÄISCHE PATENTSCHRIFT

(11) **EP 1 637 367 B1**
(45) Veröffentlichungstag und Bekanntmachung des Hinweises auf die Patenterteilung: **14.11.2007**
(21) Anmeldenummer: 05019611.2
(22) Anmeldetag: 09.09.2005
(51) Int. Cl.: B60G 15/06, F16F 9/32

(54) **Federteller**
Spring plate
Coupelle de ressort

(30) Priorität: 16.09.2004 DE 102004044752
(43) Veröffentlichungstag der Anmeldung: 22.03.2006
(73) Patentinhaber: ZF FRIEDRICHSHAFEN AG, 88046 Friedrichshafen (DE)
(72) Erfinder: Deigner, Bruno, 97464 Niederwerrn (DE); Handke, Günther, 97502 Euerbach (DE); Hassmann, Frank, 97422 Schweinfurt (DE); Hermes, Jörg, 53225 Bonn (DE); Koberstein, Joachim, 97782 Gräfendorf (DE); Miller, Alexander, 96123 Litzendorf (DE); Pagel, Jörg, 97532 Hoppachshof (DE); Renn, Josef, 97337 Dettelbach-Bahnhof (DE); Schuler, Manfred, 97456 Dittelbrunn/Hambach (DE); Stretz, Klaus, 97437 Haßfurt (DE); Zietsch, Andreas, 97532 Üchtelhausen-Zell (DE); Zimmermann, Gottfried, 97717 Suzthal (DE)

(56) Entgegenhaltungen:
- EP-A- 1 431 082
- EP-A- 1 505 313
- FR-A- 2 825 126
- US-A- 5 620 171
- US-A- 6 123 350
- US-B1- 6 612 553
- PATENT ABSTRACTS OF JAPAN Bd. 1997, Nr. 11, 28. November 1997 (1997-11-28) & JP 09 196101 A (SHOWA:KK), 29. Juli 1997 (1997-07-29)
- PATENT ABSTRACTS OF JAPAN Bd. 2003, Nr. 12, 5. Dezember 2003 (2003-12-05) -& JP 2003 222176 A (KAYABA IND CO LTD), 8. August 2003 (2003-08-08)
- PATENT ABSTRACTS OF JAPAN Bd. 012, Nr. 445 (M-767), 22. November 1988 (1988-11-22) -& JP 63 176838 A (ATSUGI MOTOR PARTS CO LTD), 21. Juli 1988 (1988-07-21)

## Beschreibung

Die Erfindung betrifft einen Federteller gemäß dem Oberbegriff von Patentanspruch 1.

Die DE 42 03 658 C2 beschreibt insbesondere für ein Fahrzeugfederbein einen Federteller, der für die Endwindung einer Schraubenfeder ein Profil aufweist, das die Schraubenfeder radial zentriert und gegen eine Verdrehung abstützt. Der Federteller verfügt über einen unrunden Umfangsbereich, an dem sich die Schraubenfeder radial abstützt. Wie aus der Figur 4 der DE 42 03 658 C2 ersichtlich ist, liegt die Schraubenfeder nahezu im Bereich der gesamten Endwindung mit ihrem Innendurchmesser am Federteller an.

Diese räumliche Ausgestaltung eines Federtellers ist in der Theorie sehr günstig, da die Federkraft der Schraubenfeder großflächig abgestützt wird. Des Weiteren kann durch das unrunde Profil der Schraubenfederauflage auch eine Verdrehsicherungsfunktion erreicht werden. Das Problem besteht jedoch darin, dass die Endwindung einer Feder unter Berücksichtigung der Fertigungskosten nur in einem eingeschränkten Toleranzbereich gefertigt werden kann, so dass die im Stand der Technik beschriebene Kombination einer Schraubenfeder mit einem Federteller nur schwerlich umsetzbar ist.

Wenn die Schraubenfeder nicht optimal auf dem Federteller aufliegt, dann treten einerseits hohe Spannungen im Federteller auf. Diese erhöhten Spannungen könnten u. U. durch die Verwendung entsprechend belastbarer Werkstoffe aufgenommen werden. Ein ebenso großes Problem stellen jedoch die Geräusche dar, die bei Längenänderungen der Schraubenfeder aufgrund einer Federungsbewegung auftreten. Vielfach werden die Geräuschprobleme durch die Verwendung einer Unterlage aus einem Kunststoff zwischen der Schraubenfeder und dem Federteller unterbunden. Bei dieser Lösung wird jedoch nicht die Ursache der Geräuschbildung behoben, sondern nur die Auswirkungen. Bei älteren Fahrzeugen kann die Unterlage auch verschlissen sein, so dass dann das Geräusch deutlich vernehmbar ist.

Die gattungsbildende FR 2 825 126 A beschreibt einen Federteller für ein Federbein, umfassend eine axiale Abstützfläche für eine Endwindung einer Schraubenfeder, wobei die Schraubenfeder von radialen Zentrierflächen im Bereich einer Umfangskontur der Endwindung zentriert wird, wobei die Zentrierfläche in einzelne Teilzentrierflächen gegliedert ist, die an der Umfangskontur der Schraubenfeder zur Anlage kommen. Die Zentrierflächen sind bevorzugt an einem rinnenförmigen Profil ausgeführt, so dass die Zentrierflächen gegenüberliegend am Innen- und Außendurchmesser der Endwindung angreifen.

Aufgabe der vorliegenden Erfindung ist es, einen Federteller im Hinblick auf eine Geräuschbildung mit einer Schraubenfeder zu minimieren.

Erfindungsgemäß wird die Aufgabe dadurch gelöst, dass an der Innen- und Außenkontur jeweils mindestens eine Teilzentrierfläche angreift, wobei die Teilzentrierflächen für die Außen- und Innenkontur der Schraubenfeder in Umfangsrichtung versetzt zueinander angeordnet sind, so dass die Feder keinesfalls zwischen zwei gegenüberliegenden Teilzentrierflächen eingeklemmt sein kann.

Die in Teilzentrierflächen gegliederte Gesamtzentrierfläche führt zu einer deutlichen Geräuschreduzierung, da etwaige Formabweichungen in Freiräumen zwischen den Teilzentrierflächen kompensiert werden können.

Im Hinblick auf eine möglichst kleine Gesamtzentrierfläche und eine gleichmäßige Verteilung der Teilzentrierflächen ist die an der Außenkontur der Schraubenfeder angreifende Zentrierfläche etwa im Bereich des halben Umfangswinkels zwischen einer ersten und einer letzten an der Innenkontur der Schraubenfeder angreifenden Zentrierfläche angeordnet.

In diesem Sinne kommt an der Außenkontur der Schraubenfeder nur eine Teilzentrierfläche mit einem beschränkten Umfangswinkel zur Anlage.

In weiterer vorteilhafter Ausgestaltung weist die Teilzentrierfläche in Richtung der Schraubenfeder auf einem Auslaufbereich einen kleineren Außenradius auf als die Innenkontur der Schraubenfeder. Etwaige Durchmesserabweichungen der Schraubenfeder führen somit nicht zu einem Verklemmen mit einer Teilzentrierfläche.

Damit sich auf dem Federteller möglichst wenig Feuchtigkeit und Schmutz sammeln kann, ist zwischen zwei an der Innenkontur der Schraubenfeder angreifenden Teilzentrierflächen eine Ablaufrinne ausgeformt.

Zur Festigkeitssteigerung des Federtellers enden die Teilzentrierflächen nach radial innen in Richtung der Ablaufrinne.

Die Teilzentrierflächen sind parallel zu einer gleichmäßig runden Berührlinie der Schraubenfeder auf dem Federteller angeordnet, so dass eine einfache runde Endwindung verwendet werden kann, die sich im Vergleich zu einer unrunden Endwindung leichter herstellen lässt.

Bei einer Ausführungsform ist eine Verbindungskontur zwischen zwei Teilzentrierflächen an der Innenkontur der Schraubenfeder als eine ungekrümmt verlaufende Schrägfläche ausgeführt. Diese Federtellerform ist besonders formstabil.

Im Hinblick auf einen geringen Umformgrad am Federteller wird ein Verdrehsicherungsanschlag für die Schraubenfeder von einer aufgestellten Zunge des Federtellers gebildet.

Anhand der folgenden Figurenbeschreibung soll die Erfindung näher erläutert werden.

Es zeigt:
- Fig. 1: Gesamtdarstellung eines Federtellers an einem Federbein
- Fig. 2: Draufsicht des Federtellers aus Fig. 1
- Fig. 3: Schnittdarstellung des Federtellers aus Fig: 1
- Fig. 4: Weitere Schnittdarstellung des Federtellers aus Fig. 1
- Fig. 5 u. 6: Federteller mit einer Ablaufrinne

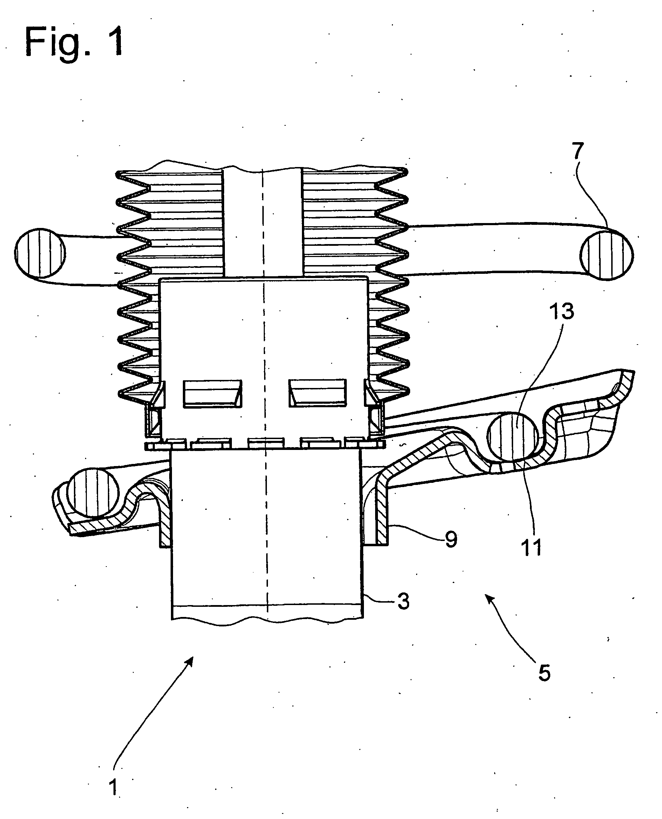

Die Fig. 1 zeigt sehr stark vereinfacht einen Ausschnitt aus einem Federbein 1, an dessen Zylinder 3 ein Federteller 5 befestigt ist, der einen Schraubenfeder 7 trägt.

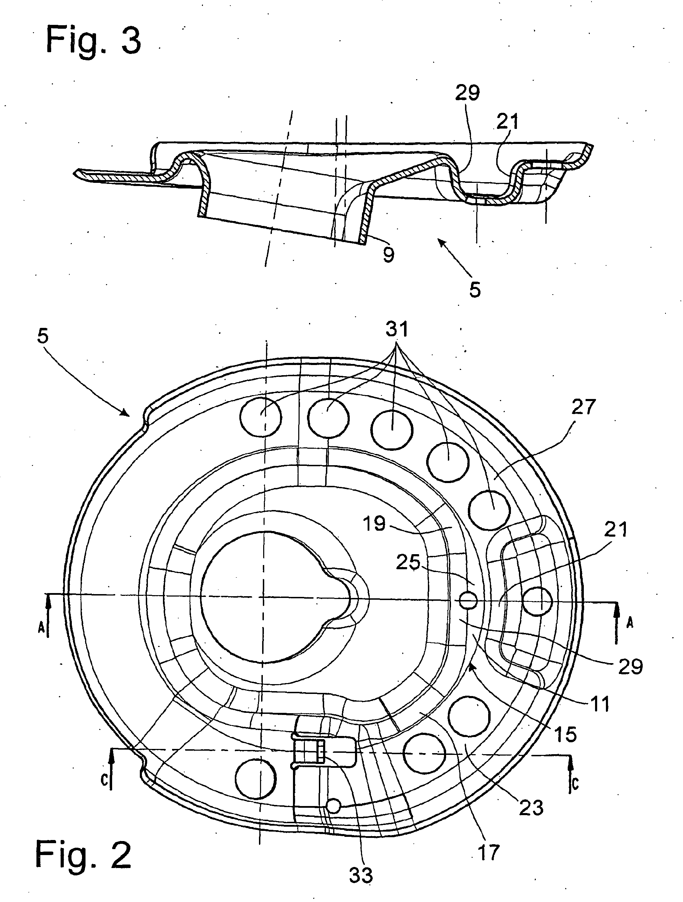

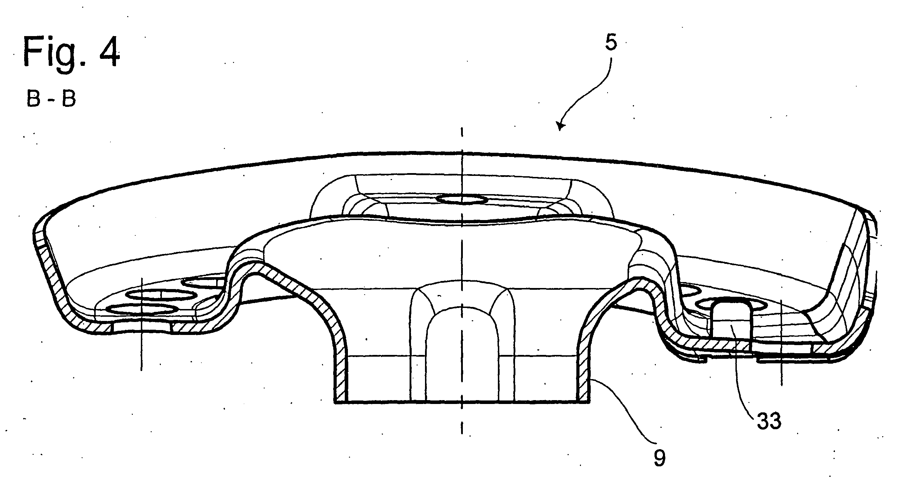

Aus der Zusammenschau der Fig. 2 bis 4 ist der Federteller 5 entsprechend der Fig. 1 als Einzelteil erkennbar, der einen Hülsenabschnitt 9 für die Befestigung am Zylinder aufweist. Dieser Hülsenabschnitt 9 geht in eine schrägverlaufende Abstützfläche 11 über, auf der eine Endwindung 13 der Schraubenfeder 7 zur Anlage kommt. In der Draufsicht nach Fig. 2 ist die Berührlinie 15 der Endwindung 13 auf der Abstützfläche 11 als dünne Volllinie dargestellt. Aus der Ebene der Abstützfläche erstreckt sich radial innen bezogen auf die Berührlinie der Endwindung eine Zentrierfläche, die in einzelne Teilzentrierflächen 17; 19 gegliedert ist und an der Umfangskontur, in dieser Darstellung an der Innenkontur, der Schraubenfeder zur Anlage kommen. Auch eine Außenkontur der Schraubenfeder wird von einer sich auf einem beschränkten Umfangswinkel erstreckende Zentrierfläche 21 abgestützt, wobei die Teilzentrierflächen 17; 19; 21 parallel zu der gleichmäßig runden Berührlinie 15 für die Schraubenfeder angeordnet sind. Die Teilzentrierflächen 17; 19; 21, die an der Innen- und Außenkontur angreifen sind in Umfangsrichtung versetzt zueinander angeordnet, so dass jweils Freiräume 23; 25; 27 zwischen den Teilzentrierflächen 23; 25; 27 vorliegen, die ggf. Form- und Lageabweichungen der Endwindung bezogen auf die Teilzentrierflächen, die sich stanztechnisch wesentlich präziser herstellen lassen, kompensieren. Dabei ist die an der Außenkontur der Schraubenfeder angreifende Zentrierfläche 21 etwa im Bereich des halben Umfangswinkels zwischen einer ersten und einer letzten an der Innenkontur angreifenden Zentrierfläche 17; 19 angeordnet. Folglich sind insgesamt nur drei Teilzentrierflächen 17; 19; 21 wirksam, die die radiale Abstützung der Endwindung der Schraubenfeder übernehmen.

In diesem Ausführungsbeispiel ist eine Verbindungskontur 29 zwischen den Zentrierflächen 17; 19 an der Innenkontur der Schraubenfeder als eine ungekrümmt verlaufende Schrägfläche ausgeführt. Dieses Gestaltungsmerkmal wirkt sich stark verfestigend auf den gesamten Federteller 5 aus, so dass ein sich der Abstützfläche 11 nach radial außen anschließender Randbereich mit Öffnungen 31 zur Gewichtsminimierung versehen werden kann.

Als Verdrehsicherung für die Endwindung 13 der Schraubenfeder 7 dient eine aus der axialen Abstützfläche 11 ausgestanzten und aufgestellten Zunge 33 des Federtellers 5.

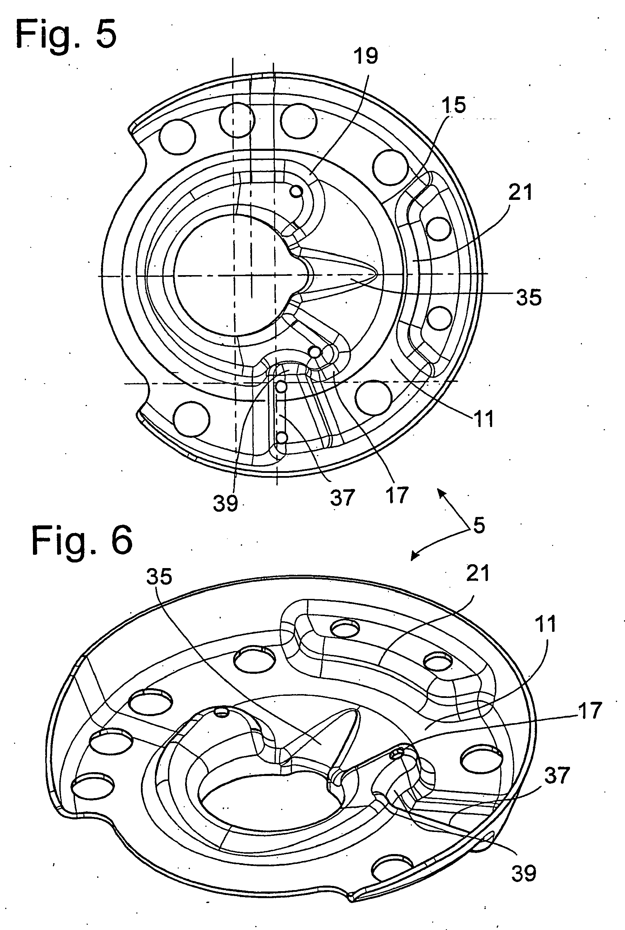

Die Figuren 5 und 6 zeigen einen Federteller 5 mit Teilzentrierflächen 17; 19 für die Innenkontur der Endwindung, wobei zwischen den Teilzentrierflächen 17; 19 eine Ablaufrinne 35 für Schmutz und Feuchtigkeit angeordnet ist. Die Teilzentrierflächen 17; 19 enden nach radial innen in Richtung der Ablaufrinne 35, die sich in Richtung des Hülsenabschnitts 9 verbreitert. Die Teilzentrierfläche 17 im Bereich eines Endanschlags 37 für die Endwindung weist einen Auslaufbereich 39 in Richtung der Schraubenfeder auf, der einen kleineren Außenradius besitzt als die Innenkontur der Schraubenfeder, so dass eine Hinterschneidung entsteht, die Bauraum für den Auslauf der Endwindung bietet.

Insgesamt steht mit dem erfindungsgemäßen Federteller 5 ein leichtes Bauteil zur Verfügung, das, wie Versuche gezeigt haben, auch ohne Federunterlage keine Geräusche durch Reibkontakt zwischen den Teilzentrierflächen 17; 19 ; 21 und der Schraubenfeder 7 aufkommen lässt.

## Patentansprüche

1. Federteller, insbesondere für ein Federbein, umfassend eine axiale Abstützfläche für eine Endwindung einer Schraubenfeder, wobei die Schraubenfeder von radialen Zentrierflächen im Bereich einer Umfangskontur der Endwindung zentriert wird, wobei die Zentrierfläche in einzelne Teilzentrierflächen gegliedert ist, die an der Umfangskontur der Schraubenfeder zur Anlage kommen,
**dadurch gekennzeichnet,**
**dass** an der Innen- und Außenkontur jeweils mindestens eine Teilzentrierfläche (17; 19; 21) angreift, wobei die Teilzentrierflächen (17; 19; 21) für die Außen- und Innenkontur der Schraubenfeder (7) in Umfangsrichtung versetzt zueinander angeordnet sind, so dass die Feder keinesfalls zwischen zwei gegenüberliegenden Teilzentrierflächen eingeklemmt sein kann.

2. Federteller nach Anspruch 1,
**dadurch gekennzeichnet,**
**dass** die an der Außenkontur der Schraubenfeder (7) angreifende Zentrierfläche (21) etwa im Bereich des halben Umfangswinkels zwischen einer ersten und einer letzten an der Innenkontur der Schraubenfeder angreifenden Zentrierfläche (17; 19) angeordnet ist.

3. Federteller nach Anspruch 1,
**dadurch gekennzeichnet,**
**dass** an der Außenkontur der Schraubenfeder (7) nur eine Zentrierfläche (21) mit einem beschränkten Umfangswinkel zur Anlage kommt.

4. Federteller nach Anspruch 1,
**dadurch gekennzeichnet,**
**dass** die Teilzentrierfläche (17; 19) in Richtung der Innenkontur der Schraubenfeder (7) auf einem Auslaufbereich einen kleinerer Außenradius (39) aufweist als die Innenkontur der Schraubenfeder (7).

5. Federteller nach Anspruch 1,
**dadurch gekennzeichnet,**
**dass** zwischen zwei an der Innenkontur der Schraubenfeder (7) angreifenden Teilzentrierflächen (17; 19) eine Ablaufrinne (35) ausgeformt ist.

6. Federteller nach Anspruch 5,
**dadurch gekennzeichnet,**
**dass** die Teilzentrierflächen (17; 19) nach radial innen in Richtung der Ablaufrinne (35) enden.

7. Federteller nach Anspruch 1,
**dadurch gekennzeichnet,**
**dass** die Teilzentrierflächen (17; 19; 21) parallel zu einer gleichmäßig runden Berührlinie (15) der Schraubenfeder (7) auf dem Federteller (5) angeordnet sind.

8. Federteller nach Anspruch 1,
**dadurch gekennzeichnet,**
**dass** eine Verbindungskontur (29) zwischen zwei Teilzentrierflächen (17; 19) an der Innenkontur der Schraubenfeder als eine ungekrümmt verlaufende Schrägfläche ausgeführt ist.

9. Federteller nach Anspruch 1,
**dadurch gekennzeichnet,**
**dass** ein Verdrehsicherungsanschlag für die Schraubenfeder (7) von einer aufgestellten Zunge (33) des Federtellers (5) gebildet wird.

## Claims

1. Spring collar, in particular for a spring strut, comprising an axial supporting face for an end winding of a helical spring, the helical spring being centred by radial centring faces in the region of a circumferential contour of the end winding, the centring face being divided into individual part centring faces which come into contact with the circumferential contour of the helical spring, **characterized in that** in each case at least one part centring face (17; 19; 21) acts on the inner and outer contours, the part centring faces (17; 19; 21) for the outer and inner contours of the helical spring (7) being offset with respect to one another in the circumferential direction, with the result that it is impossible for the spring to become jammed between two part centring faces which lie opposite one another.

2. Spring collar according to Claim 1, **characterized in that** the centring face (21) which acts on the outer contour of the helical spring (7) is arranged approximately in the region of half the circumferential angle between a first and a last centring face (17; 19) which acts on the inner contour of the helical spring.

3. Spring collar according to Claim 1, **characterized in that** only one centring face (21) comes into contact with the outer contour of the helical spring (7) with a limited circumferential angle.

4. Spring collar according to Claim 1, **characterized in that**, in the direction of the inner contour of the helical spring (7) on an exit region, the part centring face (17; 19) has a smaller external radius (39) than the inner contour of the helical spring (7).

5. Spring collar according to Claim 1, **characterized in that** a run-off channel (35) is formed between two part centring faces (17; 19) which act on the inner contour of the helical spring (7).

6. Spring collar according to Claim 5, **characterized in that** the part centring faces (17; 19) end radially to the inside in the direction of the run-off channel (35).

7. Spring collar according to Claim 1, **characterized in that** the part centring faces (17; 19; 21) are arranged on the spring collar (5) parallel to a uniformly round contact line (15) of the helical spring (7).

8. Spring collar according to Claim 1, **characterized in that** a connecting contour (29) between two part centring faces (17; 19) is configured on the inner contour of the helical spring as a non-curved oblique face.

9. Spring collar according to Claim 1, **characterized in that** an anti-rotation safeguard stop for the helical spring (7) is formed by an erected tongue (33) of the spring collar (5).

## Revendications

1. Coupelle de ressort, en particulier pour une jambe de suspension, comprenant une surface de soutien axiale pour une spire terminale d'un ressort hélicoïdal, le ressort hélicoïdal étant centré par des surfaces de centrage radiales dans la région d'un contour circonférentiel de la spire terminale, la surface de centrage étant divisée en surfaces partielles de centrage individuelles qui viennent s'appliquer contre le contour circonférentiel du ressort hélicoïdal,
**caractérisée en ce qu'**au moins une surface partielle de centrage respective (17 ; 19 ; 21) agit sur le contour intérieur et sur le contour extérieur, sachant que les surfaces partielles de centrage (17 ; 19 ; 21) pour le contour extérieur et le contour intérieur du ressort hélicoïdal (7) sont disposées en étant mutuellement décalées en direction circonférentielle, de sorte que le ressort ne peut en aucun cas être coincé entre deux surfaces partielles de centrage opposées.

2. Coupelle de ressort selon la revendication 1, **caractérisée en ce que** la surface de centrage (21) agissant sur le contour extérieur du ressort hélicoïdal (7) est disposée approximativement dans la région de la moitié de l'angle inscrit entre une première et une dernière surface de centrage (17 ; 19) agissant sur le contour intérieur du ressort hélicoïdal.

3. Coupelle de ressort selon la revendication 1, **caractérisée en ce qu'**une seule surface de centrage (21) vient s'appliquer sur le contour extérieur du ressort hélicoïdal (7) avec un angle inscrit limité.

4. Coupelle de ressort selon la revendication 1, **caractérisée en ce que** la surface partielle de centrage (17 ; 19) présente en direction du contour intérieur du ressort hélicoïdal (7), sur une région débouchante, un plus petit rayon extérieur (39) que le contour intérieur du ressort hélicoïdal (7).

5. Coupelle de ressort selon la revendication 1, **caractérisée en ce qu'**une rigole d'évacuation (35) est formée entre deux surfaces partielles de centrage (17 ; 19) agissant sur le contour intérieur du ressort hélicoïdal (7).

6. Coupelle de ressort selon la revendication 5, **caractérisée en ce que** les surfaces partielles de centrage (17 ; 19) se terminent radialement vers l'intérieur en direction de la rigole d'évacuation (35).

7. Coupelle de ressort selon la revendication 1, **caractérisée en ce que** les surfaces partielles de centrage (17 ; 19 ; 21) sont disposées sur la coupelle de ressort (5) parallèlement à une ligne de contact uniformément circulaire (15) du ressort hélicoïdal (7).

8. Coupelle de ressort selon la revendication 1, **caractérisée en ce qu'**un contour de liaison (29) entre deux surfaces partielles de centrage (17 ; 19) sur le contour intérieur du ressort hélicoïdal est réalisé sous forme de surface biaise s'étendant sans courbure.

9. Coupelle de ressort selon la revendication 1, **caractérisée en ce qu'**une butée de blocage en rotation pour le ressort hélicoïdal (7) est formée par une languette redressée (33) de la coupelle de ressort (5).
